# EUROPEAN PATENT SPECIFICATION

(11) **EP 1 857 214 B1**
(45) Date of publication and mention of the grant of the patent: **07.05.2014**
(21) Application number: 07108219.2
(22) Date of filing: 15.05.2007
(51) Int. Cl.: B23K 9/10

(54) **Electric welding machine suitable to minimize exposure of the human body to the electromagnetic fields generated by the machine and associated minimization method**
Elektrisches Schweißgerät zur Minimierung der Belastung des menschlichen Körpers durch die vom Gerät erzeugten elektromagnetischen Felder und entsprechendes Minimierungsverfahren
Machine à souder électrique adaptée pour minimiser l'exposition du corps humain aux champs électromagnétiques générés par la machine et procédé de minimisation associé

(30) Priority: 18.05.2006 IT BO20060383
(43) Date of publication of application: 21.11.2007
(73) Proprietor: TECNA S.p.A., 40024 Castel San Pietro Terme (Bologna) (IT)
(72) Inventor: AMADORI, Ezio, 40024, CASTEL SAN PIETRO TERME BO (IT); TROCCHI, Roberto, 40024, CASTEL SAN PIETRO TERME BO (IT); SERRANTONI, Luigi, 40026, IMOLA BO (IT)
(74) Representative: Modiano, Micaela Nadia

(56) References cited:
- EP-A- 0 756 915
- EP-A- 1 118 416
- GB-A- 2 019 135
- US-B1- 6 515 259

## Description

The present invention relates to an electric welding machine according to claim 1 suitable to minimize exposure of the human body to the electromagnetic fields generated by such machine and to the associated minimization method according to claim 6.

US-B1-6515259 discloses a conventional electrical arc welder using high frequency pulses and EP-A-1118416 discloses an AC waveform inverter power supply apparatus for resistance welders.

Recent studies and research, the results of which are known since they have been disclosed by means of various scientific publications, have pointed out the negative effects experienced by the human body in the vicinity of an industrial-type resistance welding machine. The current that circulates within the welding circuit in fact generates electromagnetic fields in which the bodies of the welders and of the other people who for various reasons are in the vicinity of the welding machine during welding are immersed.

It is known from these studies and this research that exposure to such electromagnetic fields varies in relation to the physical characteristics of the welding circuit and mainly according to its dimensions and shape and to the relative position of the human body and the welding circuit.

In addition to these factors, the dependency of the degree of exposure on the amplitude and waveform of the welding current that is present in the circuits, and particularly on the characteristics of the various frequency components that are present in the welding current, has also been highlighted.

The need is therefore felt to reduce to a level which is low and not harmful for health, the exposure of the human body to the magnetic fields generated by the welding current that circulates in the circuits of the welding machine.

The aim of the present invention is to meet the above mentioned need, by providing a welding machine and a method for minimizing exposure of the human body to the electromagnetic fields generated by said machine, so as to limit the effects of such fields on the health of the people who are exposed to them.

Within this aim, an object of the present invention is to provide an electric welding machine which is simple, relatively easy to provide in practice, safe in use, effective in operation, and has a relatively low cost.

In accordance with the invention, there is provided an electric welding machine as defined in the appended claims 1-5, and a method for minimizing exposure of the human body to the electromagnetic fields generated by a welding machine as defined in the appended claim 6.

Further characteristics and advantages of the invention will become better apparent from the following detailed description of some preferred but not exclusive embodiments of an electric welding machine suitable to minimize exposure of the human body to the electromagnetic fields generated by said machine and of a corresponding minimization method according to the invention, illustrated by way of non-limiting example in the accompanying drawings, therein ;
Figure 1 is a schematic view of a welding machine according to the invention in a first embodiment;
Figure 2 is a schematic view of the welding machine according to the invention in a second embodiment;
Figure 3 plots schematically, as a function of time, the alternating current generated by the frequency converter in an example of application;
Figure 4 plots schematically, as a function of time, the welding current in the same example of application as in Figure 3.

In the exemplary embodiments that follow, individual characteristics, given in relation to a specific example, may actually be interchanged with other different characteristics that exist in exemplary embodiments.

Moreover, it is noted that anything found to be already known during the patenting process is understood not to be claimed and to be the subject of a disclaimer.

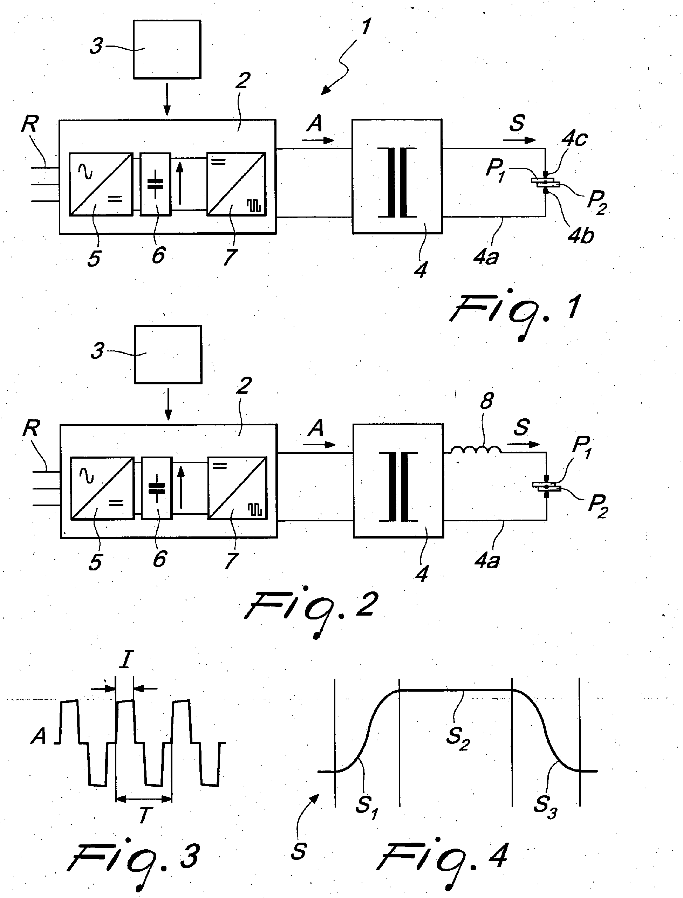

With reference to Figure 1, the reference numeral 1 generally designates an electric welding machine according to the present invention which is suitable to minimize exposure of the human body to the electromagnetic fields generated by said machine.

In the embodiment described hereafter, the welding machine according to the invention is to be understood as being preferably but not exclusively of the industrial type and in particular a resistance welding machine. Hereinafter, the mechanical characteristics of the welding machine will not be described, since they are of a substantially traditional type and therefore are known from a structural and functional standpoint.

The welding machine according to the invention comprises advantageously at least one frequency converter, generally designated by the reference numeral 2, which is powered by the electrical mains R and is adapted to generate an alternating current A. The welding machine further comprises at least one control circuit 3, which is functionally connected to the frequency converter 2, and at least one welding transformer 4, which is functionally connected to the frequency converter 2 and is adapted to generate a welding current S.

It is noted here that the welding transformer 4 can include optionally, without thereby affecting in any way the aims and results of the present invention, at least one rectifier circuit which is adapted to obtain a DC welding current S.

The welding transformer 4 is in turn functionally connected in a traditional manner to a welding circuit 4a, which has, at two ends, electrodes 4b, 4c, which are adapted to weld together two generic parts P1, P2.

Favorably, the frequency converter 2 comprises at least one input stage, which is constituted preferably by at least one AC/DC converter, designated by the reference numeral 5, at least one bank of capacitors 6, which is functionally connected to the AC/DC converter 5, and at least one output stage, which is constituted by at least one DC/AC converter, designated by the reference numeral 7 and functionally connected in turn to the bank of capacitors 6.

Conveniently, the control circuit 3 is adapted to manage the input stage and therefore the AC/DC converter 5 so as to adjust the voltage, designated by the reference letter V, across the bank of capacitors 6, so as to obtain a waveform of the welding current S whose frequency components have amplitude and phase characteristics which minimize human exposure to electromagnetic fields.

This voltage adjustment can be performed either during welding, according to a suitable function, or before welding, setting it to a preset value.

Further, the control circuit 3 is adapted to manage the output stage, and therefore the DC/AC converter 7, so as to adjust the switching frequency of the frequency converter 2 during a weld, so as to obtain a waveform of the welding current S whose frequency components have amplitude and phase characteristics which minimize human exposure to electromagnetic fields.

Moreover, the control circuit 3 is conveniently adapted to manage the output stage and therefore the DC/AC converter 7, so as to adjust the duration of the pulse I to the switching frequency of the frequency converter 2 during a weld, so as to obtain a waveform of the welding current S whose frequency components have amplitude and phase characteristics which minimize human exposure to electromagnetic fields.

Appropriate programming of the control circuit 3 so as to manage these parameters, i.e., the voltage V across the bank of capacitors 6, the switching frequency and the duration of the pulse at the switching frequency of the frequency converter 2, independently of each other or even in correlation with each other, allows to obtain the selected waveform of the welding current S in order to minimize human exposure to the electromagnetic fields generated by the welding machine.

However, it has been found experimentally that better results on the waveform of the welding current S are achieved by acting simultaneously on more than one of these parameters during the execution of a weld. In greater detail, conveniently, the control circuit 3 is therefore adapted to manage in combination the input stage (the AC/DC converter 5) and the output stage (the DC/AC converter 7) so as to adjust the voltage V across the bank of capacitors 6 and also the switching frequency of the frequency converter 2 during the execution of a same weld.

Further, the control circuit 3 is adapted to manage in combination the input stage (the AC/DC converter 5) and the output stage (the DC/AC converter 7), so as to adjust the voltage V across the bank of capacitors and also the duration of the pulse I at the switching frequency of the frequency converter 2 during the execution of a same weld.

The control circuit 3 is further adapted to manage in combination the input stage (the AC/DC converter 5) and the output stage (the DC/AC converter 7) so as to adjust the switching frequency of the frequency converter 2 and the duration of the pulse I to the switching frequency of the frequency converter 2 during the execution of a same weld.

Even more advantageously, the control circuit 3 is adapted to manage in combination the input stage (the AC/DC converter 5) and the output stage (the DC/AC converter 7) so as to adjust the voltage V across the bank of capacitors 6, the switching frequency of the frequency converter 2, and the duration of the pulse I to the switching frequency of said frequency converter during the execution of a same weld.

Merely by way of example, a specific application of the welding machine according to the invention is described hereinafter which comprises in particular a welding transformer 4 which is provided with a rectifier circuit and therefore generates a direct welding current S. This specific application is clarified further with the aid of Figures 3 and 4.

Figure 3 in fact plots schematically the behavior over time of the alternating current A delivered by the frequency converter 2. The alternating current A is characterized by a switching frequency, which is the inverse of the period T indicated in Figure 3, and by a duration of the pulse I.

Figure 4 instead plots schematically the behavior of the welding current S delivered by the welding transformer 4 provided in the welding machine according to the invention.

In this example of application, the welding current S is composed of three different steps, i.e., a first step S1, in which the current reaches a preset value adapted to provide welding (a value which of course depends on the materials, on the thicknesses of the parts P1, P2, and others), a second step S2, in which the current remains at said preset value, and a third step S3, in which the current is returned to 0.

According to the invention, during steps S1 and S3 both the switching frequency and the duration of the pulse I are changed simultaneously by means of the control circuit 3, with suitable respective values (which are constant or variable over time), so as to obtain the selected waveform of the welding current S, which is optimized so as to have frequency components with amplitude and phase characteristics which minimize human exposure to electromagnetic fields.

During step S2, instead, the voltage V across the bank of capacitors 6 is appropriately adjusted by means of the control circuit 3 so as to minimize the so-called ripple of the welding current S and therefore obtain a waveform of the welding current whose frequency components have amplitude and phase characteristics which minimize human exposure to electromagnetic fields.

The behavior of the welding current S obtained therefore with the adjustment technique described above, as clearly shown in Figure 4, has a minimal content of frequency components and therefore allows to minimize human exposure to the electromagnetic fields generated by the welding machine.

The method described above can also be applied to the individual alternating welding current half-waves.

The control circuit 3 is further adapted to adjust simultaneously and in combination the voltage V across the bank of capacitors 6, the switching frequency and the duration of the pulse I at the switching frequency in relation to the physical and geometric characteristics of the welding circuit 4a, so as to obtain a waveform of the welding current whose frequency components have amplitude and phase characteristics which minimize human exposure to electromagnetic fields. For example, the control circuit 3 is capable of taking into account the dimensions of the welding pincers or arms (length, surrounded surface, and others), so as to adjust accordingly said parameters and contain exposure to the electromagnetic fields generated by the welding machine within acceptable values for the health of the operators.

A second embodiment of the welding machine according to the invention is shown in Figure 2.

In this embodiment, the welding machine has the welding transformer 4 associated with a respective welding circuit 4a which is provided with at least one inductor 8, which has an inductance value which obtains a waveform of the welding current whose frequency components have amplitude and phase characteristics which minimize human exposure to electromagnetic fields.

It has thus been shown that the invention achieves the intended aim and object.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric welding machine (1) comprising:
at least one frequency converter (2), which is powered by the electrical mains (R) and is adapted to generate an alternating current (A),
at least one control circuit (3), which is functionally connected to said frequency converter (2), and
at least one welding transformer (4), which is functionally connected to said frequency converter (2) and is adapted to generate a welding current (S),
said frequency converter (2) comprising at least one input stage (5) constituted by at least one AC/DC converter, at least one bank of capacitors (6) which is functionally connected to said AC/DC converter (5), and at least one output stage (7), which is constituted by at least one DC/AC converter, which is functionally connected to said bank of capacitors (6),
said control circuit (3) being configured to manage in combination said input stage (5) and said output stage (7) so as to adjust the voltage (V) across said bank of capacitors (6) to a predefined value,
said control circuit (3) being further configured to manage in combination said input stage (5) and said output stage (7) so as to adjust, during a first step (SI) of the welding operation, the switching frequency and the duration of the pulse (I) of said frequency converter (2) so as to bring said welding current (S) from the value 0 to a preset value,
said control circuit (3) being further configured to manage in combination said input stage (5) and said output stage (7) so as to maintain, during a second step (S2) of the welding operation, said voltage (V) at said predefined value so as to keep said welding current (S) substantially stable at said preset value,
said control circuit (3) being further configured to manage in combination said input stage (5) and said output stage (7) so as to adjust, in a third step (S3) of the welding operation, the switching frequency and duration of the pulse (I) of said frequency converter (2), so as to bring said welding current (S) from said preset
value to the value 0.

2. The welding machine according to claim 1, **characterized in that** said welding circuit (4a) is provided with at least one inductor (8).

3. The welding machine according to one or more of the preceding claims, **characterized in that** said control circuit (3) is configured to adjust said voltage (V) during the execution of a weld.

4. The welding machine according to one or more of the preceding claims, **characterized in that** said welding transformer (4) is associated with a respective welding circuit (4a).

5. The welding machine according to one or more of the preceding claims, **characterized in that** said welding transformer (4) comprise at least one rectifier circuit which is adapted to obtain a DC welding current (S).

6. A method for minimizing exposure of the human body to the electromagnetic fields generated by a welding machine according to one or more of the preceding claims, **characterized in that** it performs in succession the following steps:
adjusting the voltage (V) to a predefined value;
adjusting, during a first step (S1) of the welding operation, by way of said control circuit (3), the switching frequency and the duration of the pulse (I) of said frequency converter (2), with respective suitable behaviors, so as to obtain the selected waveform of said welding current (S), optimized so as to have frequency components with amplitude and phase characteristics which minimize human exposure to electromagnetic fields, said first step (S1) being adapted to bring said welding current (S) from the value 0 to a preset value;
- performing a second step (S2) of the welding operation, during which said control circuit (3) keeps said voltage (V) at said predefined value, so as to minimize the ripple of said welding current (S) and thus obtain a waveform of said welding current (S) whose frequency components have amplitude and phase characteristics which minimize human exposure to electromagnetic fields, said second step (S2)
being adapted to keep said welding current (S) substantially stable at said preset value;
- adjusting, in a third step (S3) of the welding operation, by way of said control circuit (3), the switching frequency and duration of the pulse (I) of said frequency converter (2), with respective appropriate behaviors, so as to obtain the selected waveform of said welding current (S), optimized so to have frequency components with amplitude and phase characteristics which minimize human exposure to electromagnetic fields, said third step (S3) being adapted to bring said welding current (S) from said preset value to the value 0.

## Patentansprüche

1. Elektrisches Schweißgerät (1), aufweisend:
mindestens einen Frequenzwandler (2), der durch das elektrische Stromversorgungsnetz (R) mit Strom versorgt wird und ausgebildet ist, um einen Wechselstrom (A) zu erzeugen, mindestens eine Steuerschaltung (3), die funktionsmäßig mit dem Frequenzwandler (2) verbunden ist, und
mindestens einen Schweißtransformator (4), der funktionsmäßig mit dem Frequenzwandler (2) verbunden ist und ausgebildet ist, um einen Schweißstrom (S) zu erzeugen,
wobei der Frequenzwandler (2) mindestens eine Eingangsstufe (5) aufweist, die gebildet ist durch: mindestens einen AC/DC-Wandler, mindestens eine Bank von Kondensatoren (6), die funktionsmäßig mit dem AC/DC-Wandler (5) verbunden ist, und mindestens eine Ausgangsstufe (7), die durch mindestens einen DC/AC-Wandler gebildet ist, der funktionsmäßig mit der Bank von Kondensatoren (6) verbunden ist,
wobei die Steuerschaltung (3) konfiguriert ist, um in Kombination die Eingangsstufe (5) und die Ausgangsstufe (7) zu steuern, so dass die Spannung (V) über der Bank von Kondensatoren (6) auf einen vorbestimmten Wert angepasst wird,
wobei die Steuerschaltung (3) weiter konfiguriert ist, um in Kombination die Eingangsstufe (5) und die Ausgangsstufe (7) zu steuern, so dass, bei einem ersten Schritt (S1) der Schweißoperation, die Schweißfrequenz und die Dauer des Pulses (I) des Frequenzwandlers (2) angepasst wird, so dass der Schweißstrom (S) von dem Wert 0 auf einen vorbestimmten Wert gebracht wird,
wobei die Steuerschaltung (3) weiter konfiguriert ist, um in Kombination die Eingangsstufe (5) und die Ausgangsstufe (7) zu steuern, so dass, bei einem zweiten Schritt (S2) der Schweißoperation, die Spannung (V) auf dem vordefinierten Wert gehalten wird, so dass der Schweißstrom (S) im Wesentlichen stabil auf dem vorbestimmten Wert gehalten wird,
wobei die Steuerschaltung (3) weiter konfiguriert ist, um in Kombination die Eingangsstufe (5) und die Ausgangsstufe (7) zu steuern, so dass, bei einem dritten Schritt (S3) der Schweißoperation, die Schweißfrequenz und die Dauer des Pulses (I) des Frequenzwandlers (2) angepasst wird, so dass der Schweißstrom (S) von dem vorbestimmten Wert auf den Wert 0 gebracht wird.

2. Schweißgerät nach Anspruch 1, **dadurch gekennzeichnet, dass** der Schweißstromkreis (4a) mit mindestens einer Induktivität (8) versehen ist.

3. Schweißgerät nach einem oder mehreren der vorhergehenden Ansprüche, **dadurch gekennzeichnet, dass** die Steuerschaltung (3) konfiguriert ist, um die Spannung (V) während des Ausführens eines Schweißens anzupassen.

4. Schweißgerät nach einem oder mehreren der vorhergehenden Ansprüche, **dadurch gekennzeichnet, dass** der Schweißtransformator (4) einem betreffenden Schweißstromkreis (4a) zugehörig ist.

5. Schweißgerät nach einem oder mehreren der vorhergehenden Ansprüche, **dadurch gekennzeichnet, dass** der Schweißtransformator (4) mindestens eine Gleichrichterschaltung aufweist, die ausgebildet ist, um einen Gleichstrom-Schweißstrom (S) zu erzielen.

6. Verfahren zum Minimieren einer Belastung des menschlichen Körpers durch die elektromagnetischen Felder, die durch ein Schweifigerät nach einem oder mehreren der vorhergehenden Ansprüche erzeugt werden, **dadurch gekennzeichnet, dass** es aufeinanderfolgend die folgenden Schritte ausführt:
Anpassen der Spannung (V) auf einen vorbestimmten Wert, Anpassen, bei einem ersten Schritt (S1) der Schweißoperation mittels der Steuerschaltung (3), der Schaltfrequenz und der Dauer des Pulses (1) des Frequenzwandlers (2) mit jeweils geeignetem Verhalten, so dass die gewählte Wellenform des Schweißstroms (S) erzielt wird, die so optimiert ist, dass sie Frequenzkomponenten mit Amplituden- und Phaseneigenschaften hat, welche eine Belastung eines Menschen durch elektromagnetische Felder minimieren, wobei der erste Schritt (S1) ausgebildet ist,
um den Schweißstrom (S) vom Wert 0 auf einen vorbestimmten Wert zu bringen;
Durchführen eines zweiten Schrittes (S2) der Schweißoperation, bei dem die Steuerschaltung (3) die Spannung (V) auf dem vordefinierten Wert hält, so dass die Welligkeit des Schweißstroms (S) minimiert wird und somit eine Wellenform des Schweißstromes (S) erzielt wird, deren Frequenzkomponenten Amplituden- und
Phaseneigenschaften haben, die eine Belastung eines Menschen durch elektromagnetische Felder minimieren, wobei der zweite Schritt (S2) ausgebildet ist, um den Schweißstrom (S) im Wesentlichen stabil auf dem vorbestimmten Wert zu halten;
Anpassen, bei einem dritten Schritt (S3) der Schweißoperation mittels der Steuerschaltung (3), der Schaltfrequenz und der Dauer des Pulses (I) des Frequenzwandlers (2) mit jeweils geeignetem Verhalten, so dass die gewählte Wellenform des Schweißstroms (S) erzielt wird, die so optimiert ist, dass sie Frequenzkomponenten mit Amplituden- und Phaseneigenschaften hat, welche eine Belastung eines Menschen durch elektromagnetische Felder minimieren, wobei der dritte Schritt (S3) ausgebildet ist, um den Schweißstrom (S) von dem vorbestimmten Wert auf den Wert 0 zu bringen.

## Revendications

1. Machine à souder électrique (1) comprenant :
au moins un convertisseur de fréquence (2), qui est alimenté par le réseau électrique (R) et est adapté pour générer un courant alternatif (A),
au moins un circuit de commande (3), qui est fonctionnellement connecté audit convertisseur de fréquence (2), et
au moins un transformateur de soudage (4), qui est fonctionnellement connecté audit convertisseur de fréquence (2) et est adapté pour générer un courant de soudage (S),
ledit convertisseur de fréquence (2) comprenant au moins un étage d'entrée (5) constitué par au moins un convertisseur alternatif-continu, au moins un groupe de condensateurs (6) qui est fonctionnellement connecté audit convertisseur alternatif-continu (5), et au moins un étage de sortie (7), qui est constitué par au moins un convertisseur continu-alternatif, qui est fonctionnellement connecté audit groupe de condensateurs (6),
ledit circuit de commande (3) étant configuré pour gérer en combinaison ledit étage d'entrée (5) et ledit étage de sortie (7) de manière à régler la tension (V) aux bornes dudit groupe de condensateurs (6) sur une valeur prédéfinie,
ledit circuit de commande (3) étant en outre configuré pour gérer en combinaison ledit étage d'entrée (5) et ledit étage de sortie (7) de manière à régler, pendant une première étape (S1) de l'opération de soudage, la fréquence de commutation et la durée de l'impulsion (I) dudit convertisseur de fréquence (2) afin de faire passer ledit courant de soudage (S) de la valeur 0 à une valeur préétablie,
ledit circuit de commande (3) étant en outre configuré pour gérer en combinaison ledit étage d'entrée (5) et ledit étage de sortie (7) de manière à maintenir, pendant une deuxième étape (S2) de l'opération de soudage, ladite tension (V) au niveau de ladite valeur prédéfinie afin de maintenir ledit courant de soudage (S) substantiellement stable au niveau de ladite valeur préétablie,
ledit circuit de commande (3) étant en outre configuré pour gérer en combinaison ledit étage d'entrée (5) et ledit étage de sortie (7) de manière à régler, dans une troisième étape (S3) de l'opération de soudage, la fréquence de commutation et la durée de l'impulsion (I) dudit convertisseur de fréquence (2) afin de faire passer ledit courant de soudage (S) de ladite valeur préétablie à la valeur 0.

2. Machine à souder selon la revendication 1, **caractérisée en ce que** ledit circuit de soudage (4a) est pourvu d'au moins une bobine d'induction (8).

3. Machine à souder selon l'une ou plusieurs des revendications précédentes, **caractérisée en ce que** ledit circuit de commande (3) est configuré pour ajuster ladite tension (V) pendant l'exécution d'une soudure.

4. Machine à souder selon l'une ou plusieurs des revendications précédentes, **caractérisée en ce que** ledit transformateur de soudage (4) est associé à un circuit de soudage respectif (4a).

5. Machine à souder selon l'une ou plusieurs des revendications précédentes, **caractérisée en ce que** ledit transformateur de soudage (4) comprend au moins un circuit redresseur qui est adapté pour obtenir un courant de soudage continu (S).

6. Procédé de minimisation de l'exposition du corps humain aux champs électromagnétiques générés par une machine à souder selon l'une ou plusieurs des revendications précédentes, **caractérisé en ce qu'**il exécute l'une après l'autre les étapes suivantes :
- régler la tension (V) sur une valeur prédéfinie ;
- régler, pendant une première étape (S1) de l'opération de soudage, au moyen dudit circuit de commande (3), la fréquence de commutation et la durée de l'impulsion (I) dudit convertisseur de fréquence (2), avec des comportements appropriés respectifs, afin d'obtenir la forme d'onde choisie dudit courant de soudage (S), optimisée de manière à avoir des composantes de fréquence avec des caractéristiques d'amplitude et de phase qui minimisent l'exposition humaine aux champs électromagnétiques, ladite première étape (S1) étant adaptée pour faire passer ledit courant de soudage (S) de la valeur 0 à une valeur préétablie ;
- exécuter une deuxième étape (S2) de l'opération de soudage, pendant laquelle ledit circuit de commande (3) maintient ladite tension (V) au niveau de ladite valeur prédéfinie, afin de minimiser l'ondulation dudit courant de soudage (S) et obtenir ainsi une forme d'onde dudit courant de soudage (S) dont les composantes de fréquence ont des caractéristiques d'amplitude et de phase qui minimisent l'exposition humaine aux champs électromagnétiques, ladite deuxième étape (S2) étant adaptée pour maintenir ledit courant de soudage (S) substantiellement stable au niveau de ladite valeur préétablie ;
régler, dans une troisième étape (S3) de l'opération de soudage, au moyen dudit circuit de commande (3), la fréquence de commutation et la durée de l'impulsion (I) dudit convertisseur de fréquence (2), avec des comportements appropriés respectifs, afin d'obtenir la forme d'onde choisie dudit courant de soudage (S), optimisée de manière à avoir des composantes de fréquence avec des caractéristiques d'amplitude et de phase qui minimisent l'exposition humaine aux champs électromagnétiques, ladite troisième étape (S3) étant adaptée pour faire passer ledit courant de soudage (S) de ladite valeur préétablie à la valeur 0.
